# EUROPÄISCHE PATENTANMELDUNG

(11) **EP 1 375 267 A2**
(43) Veröffentlichungstag der Anmeldung: **02.01.2004**
(21) Anmeldenummer: 03007513.9
(22) Anmeldetag: 01.04.2003
(51) Int. Cl.: B60R 21/34

(54) **Verfahren und System zum Erkennen einer Unfallgefahr**

(30) Priorität: 28.06.2002 DE 10229033
(71) Anmelder: ROBERT BOSCH GMBH, 70442 Stuttgart (DE)
(72) Erfinder: Klotz, Albrecht, 72076 Tuebingen (DE); Schmid, Dirk, 75397 Simmozheim (DE)

(57) **Zusammenfassung**

Die Erfindung betrifft eine Vorrichtung und ein Verfahren zum Erkennen einer Unfallgefahr, bei dem mittels Abstandssensoren (4) eines Fahrzeugs (1) Objekte (6) in Erfassungsbereichen (5) vor und/oder hinter dem Fahrzeug (1) erfasst werden, aus den Abstandssignalen (S1) während einer Fahrt des Fahrzeugs (1) Abstände der Objekte (6) vor und/oder hinter dem Fahrzeug (1) ermittelt werden und bei stehendem Fahrzeug (1) eine Kollisionsgefahr des Objektes (6) mit einer sich öffnenden Fahrzeugtür (7) des Fahrzeugs (1) ermittelt wird.

## Beschreibung

Die Erfindung betrifft ein Verfahren und eine Vorrichtung zum Erkennen einer Unfallgefahr.

In Fahrzeugen sind in zunehmenden Maße umfeldsensierende Fahrerassistenzsysteme und Sicherheitssysteme wie z. B. Distanzwarner, Einpark- und Rückfahrhilfen, Abstandsregeltempomat, Spurwechselwarner, Tote-Winkel- und Precrash-Detektionssysteme vorgesehen, die Abstandssensoren zur Ermittlung eines Abstandes von Objekten vor und/oder hinter dem Fahrzeug verwenden. Die Abstandsmessung erfolgt hierbei auf Basis von Ultraschallsensoren, Radarsensoren, Infrarotsensoren (LIDAR) oder z. B. im Cockpit hinter der Windschutzscheibe vorgesehenen Videokameras. Die von den Sensoren ausgegebenen Signale geben den Abstand und je nach Sensorauslegung auch die Relativgeschwindigkeit von Objekten vor oder hinter dem Fahrzeug wieder und werden zur Ermittlung einer gefährlichen Fahrsituation oder zur Unterstützung des Fahrers beim Führen des Fahrzeuges genutzt.

Die DE 41 19 579 A1 zeigt eine Vorrichtung zum Erfassen von Gegenständen im nicht direkt einsehbaren Sichtfeld eines Kraftfahrzeugs, bei der in dem Türfalz einer Fahrzeugtür eine Abstandsmessvorrichtung eingebaut ist, die z. B. auf Ultraschall-, Infrarot- oder Radar-Basis arbeitet. Die Vorrichtung wird bei Ausschwenken der Fahrzeugtür aktiviert, wofür z. B. durch einen Türkontaktschalter für die Innenbeleuchtung als Steuerung verwendet wird. Sobald die Tür hinreichend weit ausgeschwenkt ist, kann die Abstandmessvorrichtung mit ihrem Strahlkegel einen Fahrradfahrer erfassen, der sich dem Schwenkbereich der gerade aufschwenkenden Tür nähert. Um eine Kollision des Radfahrers mit der Fahrzeugtür zu vermeiden, wird eine Türbremse unmittelbar aktiviert, die die Tür blockiert. Das Ausgangssignal der Abstandsmessvorrichtung kann hierbei auch hinsichtlich seiner zeitlichen Veränderung untersucht werden.

Eine derartige Vorrichtung ist jedoch relativ aufwendig und kostspielig, da in jeder Fahrzeugtür eine entsprechende Abstandsmessvorrichtung vorgesehen sein muss. Weiterhin können nur einige mögliche Kollisionsfälle während des Öffnungsvorganges der Tür erkannt werden, wenn die bereits geöffnete Tür gerade in einem derartig günstigen Winkel zum Fahrzeug steht, dass die Abstandsmessvorrichtung den Radfahrer mit ihrem Detektionswinkel erfassen kann. Die Kosten sind für den erreichbaren Nutzen somit relativ hoch.

Das erfindungsgemäße Verfahren nach Anspruch 1 und die erfindungsgemäße Vorrichtung nach Anspruch 10 weisen demgegenüber insbesondere den Vorteil auf, dass mit relativ geringem zusätzlichen apparativen Aufwand und vorteilhafterweise geringen Kosten ein sicheres Erkennen einer Kollisionsgefahr einer Fahrzeugtür mit sich bewegenden Objekten ermöglicht wird. Hierbei ist insbesondere auch ein vorausschauendes Erkennen einer Kollisionsgefahr bei noch geschlossener Tür möglich. Die Unteransprüche beschreiben bevorzugte Weiterbildungen. Hierbei ist insbesondere auch eine Verringerung einer Kollisionsgefahr durch Maßnahmen zur Beeinflussung der Tür vorgesehen.

Erfindungsgemäß wird ein aus einer Abstandsmesseinrichtung und Berechnungseinrichtung im Fahrzeug bereits für eine Abstands- bzw. Relativgeschwindigkeitsmessung von vor und/oder hinter dem Fahrzeug stehenden Objekten benutztes umfeldsensierendes System, z. B. ein Distanzwarnsystem oder ein Einparkhilfesystem, zusätzlich für eine weitere Funktionalität verwendet. Hierbei wird eine Kollisionsgefahr einer sich öffnenden Fahrzeugtür mit den erfassten Objekten ermittelt. Diese Objekte können insbesondere Radfahrer, Inline-Skater, Rollschuhfahrer oder Fußgänger sein, die sich oftmals ohne Einhaltung eines hinreichenden Sicherheitsabstandes an den Fahrzeugtüren vorbeibewegen. Für die erfindungsgemäße zusätzliche Funktionalität sind somit keine weiteren Sensoren erforderlich. Vorteilhafterweise kann hierfür auch eine im Fahrzeug bereits vorhandene Berechnungseinrichtung, z. B. eine Steuereinrichtung für das umfeldsensierende System oder die Fahrdynamikregelung verwendet werden, so dass die erfindungsgemäße Vorrichtung und das erfindungsgemäße Verfahren zumindest im Wesentlichen nur durch zusätzliche Software verwirklicht werden können. Die Erfassungsbereiche sind erfindungsgemäß nicht auf das direkte Umfeld der Türen beschränkt, wodurch insbesondere eine frühzeitige Kollisionserkennung von schnellen Objekten wie z. B. Fahrrädern möglich ist.

Erfindungsgemäß kann ein ermitteltes Kollisionssignal nur angezeigt werden, z. B. akustisch oder optisch. Ergänzend kann weiterhin eine Einrichtung zur Beeinflussung eines Türöffnungsvorgangs angesteuert werden, z. B. eine Türbremse zum Abbremsen oder Stoppen des Öffnungsvorgangs der Fahrzeugtür, oder die in der Zentralverriegelung bereits vorgesehene Verriegelungseinrichtung der Fahrzeugtür angesteuert werden.

Die Ermittlung einer Kollisionsgefahr erfolgt vorteilhafterweise durch Ermittlung einer Trajektorie des Objektes aus der ermittelten Position und seinem Geschwindigkeitsvektor, der z. B. durch Dopplereffekt oder durch Messung der zeitlichen Änderung seiner Positionen in dem Erfassungsbereich der Sensoren ermittelt wird. Die Trajektorie wird dann über den Erfassungsbereich der Sensoren extrapoliert, um zu ermitteln, ob die Trajektorie dem Schwenkbereich einer der Fahrzeugtüren hineichend nahe kommt. Hierbei kann ein Mindestabstandswert zu den Schwenkbereichen der Türen vorgegeben werden, unterhalb von dem eine Kollisionsgefahr erkannt wird. Der Mindestabstand kann hierbei auch auf Null gesetzt werden; Vorteilhafterweise wird er jedoch größer angenommen, da die Bahn des Objektes nach Verlassen des Erfassungsbereichs von der extrapolierten Trajektorie abweichen kann.

Die Erfindung wird im Folgenden anhand der beiliegenden Zeichnungen an einigen Ausführungsformen näher erläutert. Es zeigen:
Fig. 1 eine Draufsicht auf eine Straßenszene mit einem stehenden Fahrzeug und einem an dem Fahrzeug entlang fahrenden Radfahrer und einem entlanggehenden Fußgänger;
Fig. 2 ein Blockdiagramm der erfindungsgemäßen Vorrichtung.

An einem an einem Fahrbahnrand stehenden Fahrzeug 1 sind in dem vorderen Stoßfänger 2 und dem hinteren Stoßfänger 3 - oder z. B. auch im Außenspiegel - Abstandsensoren 4 auf z. B. Ultraschall-, Infrarot- oder Radar-Basis vorgesehen, die jeweils innerhalb ihres Erfassungsbereichs 5 Objekte 6 erfassen. Die Abstandssensoren können auch als Videokameras im Fahrzeug-Cockpit, z. B. hinter der Windschutzscheibe 13, vorgesehen sein. Ein sich nähernder Fahrradfahrer 6 und ein sich nähernder Fußgänger 6 werden bald von einem oder mehreren der Abstandsensoren 4 erfasst werden. In den Erfassungsbereichen 5 werden mehrere aufeinanderfolgende Positionen des Radfahrers 6 und des Fußgängers 6 ermittelt.

Die Abstandssensoren 4 geben Abstandssignale S1 an eine zentrale Berechnungseinrichtung 9 aus, die aus den Abstandssignalen S1 zusammen mit den jeweiligen Detektionszeitpunkten mögliche Kollisionen berechnet. Hierbei wird eine Trajektorie des Radfahrers 6 ermittelt und verglichen, ob sie einem Schwenkbereich 8 der Fahrzeugtür 7 derartig nahe kommt, dass ein vorgegebener Mindestabstandswert unterschritten wird.

Die Maximalgeschwindigkeit der Objekte 6, die sinnvoll bearbeitet werden kann, hängt im Wesentlichen von der Zykluszeit der Sensoren, deren Genauigkeit und deren Erfassungsbereichen 5, die nach hinten und vorne unterschiedlich sein können, ab. Je schneller der Sensor und je länger der Erfassungsbereich 5 ist, desto höhere Geschwindigkeit des Objektes 6 können zugelassen werden. Für z. B. einen Ultraschall-Sensor mit einer Reichweite von ca. 3 m ist eine maximal zulässige Geschwindigkeit des annähernden Objektes von 10-20 km/h relativ zum Fahrzeug 1 vorgesehen. Bei einem LIDAR-Sensor mit einer Reichweite von 20 m nach hinten ist eine maximal zulässige Relativgeschwindigkeit des annähernden Objektes 6 von ca. 40 km/h vorgesehen.

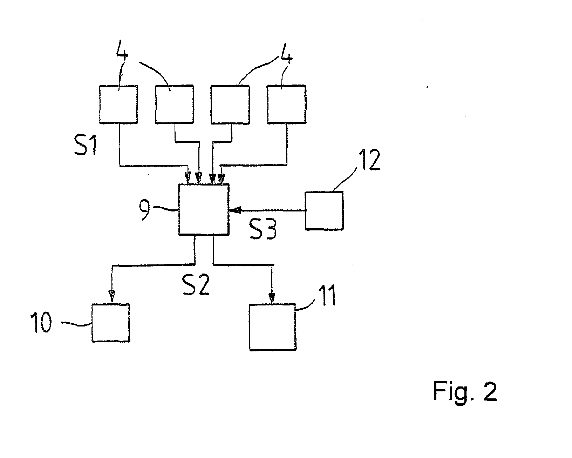

Die in Fig. 2 gezeigte Berechnungseinrichtung 9 ermittelt eine Kollisionsgefahr und gibt bei erkannter Kollisionsgefahr ein Kollisionssignal S2 an eine Warnanzeige 10, die z. B. optisch oder akustisch sein kann, zur Warnung des Fahrers bzw. Beifahrers des Fahrzeugs 1 aus. Alternativ und/oder ergänzend kann das Kollisionssignal S2 auch an eine Türbremse 11 oder Türverriegelungseinrichtung ausgegeben werden, um die Gefahr einer Kollision nicht nur zu detektieren, sondern auch zu verringern oder sogar zu beheben.

Erfindungsgemäß können mögliche Fehlauslösungen vermieden werden, wenn zusätzliche Angaben über die Situation ermittelt werden. Hierzu können eine weitere Detektionseinrichtung 12 bzw. mehrere weitere Detektionseinrichtungen 12 vorsehen sein, die jeweils ein Aktivierungssignal S3 an die Berechnungseinrichtung 9 ausgeben. Die Detektionseinrichtungen 12 können z. B. eine Detektionseinrichtung für einen Randstein der Straße oder ein Navigationssystem des Fahrzeugs zusammen mit der Berechnungseinrichtung 9 sein, die z. B. eine bebaute Gegend aus Angaben einer Straßenkarte ermittelt und/oder eine Stopand- Go- Situation sensiert, die unzulässiger Weise aufgrund der sich langsam nähernden weiteren Fahrzeuge um das betreffende Fahrzeug 1 herum zur Erkennung einer Kollisionsgefahr führen kann. Somit kann ein Aktivierungssignal S3 in ausgegeben werden, wenn ein Randstein detektiert wurde und/oder das Fahrzeug sich in einer bebauten Gegend befindet und/oder das Vorliegen einer Stop- and Go-Situation ausgeschlossen wird.

Erfindungsgemäß kann insbesondere auch ein Sensor zur Detektion einer Berührung des Türöffners oder Betätigung des Türöffners als Detektionseinrichtung 12 zur Aktivierung der Vorrichtung vorgesehen sein. Dies kann ein einfacher Berührungssensor an dem Türöffner sein, oder auch der Türsensor, der bei geöffneter Tür das Ansteuersignal für die Innenbeleuchtung des Fahrzeugs ausgibt.

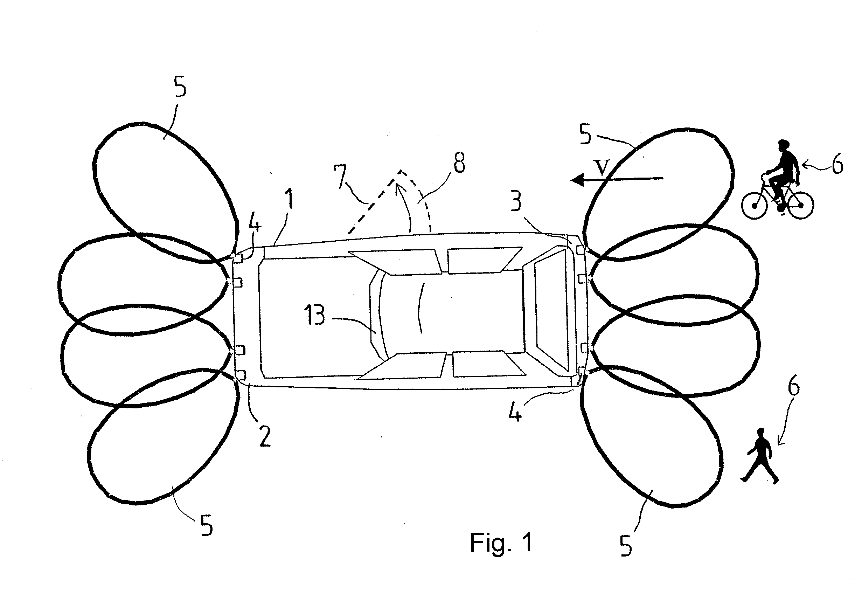

In der Ausführungsform der Fig. 1 will z. B. der Beifahrer aus dem stehenden Fahrzeug 1 aussteigen, wozu er einen Türöffner 12 betätigt, um die Fahrzeugtür 7 durch Schwenken entlang ihres Schwenkbereichs 8 zu öffnen. Da zumindest aus den Fahrverhalten des Radfahrers 6 eine mögliche Kollision mit der Fahrzeugtür 7 im Schwenkbereich 8 des Fahrzeuges 1 ermittelt wird und das Aktivierungssignal S3 des Türöffners 12 vorliegt, gibt die Berechnungseinrichtung 9 ein Kollisionssignal S2 an die Warnanzeige 10 aus, die z. B. eine optische Warnanzeige oder akustische Warnanzeige sein kann. Weiterhin kann eine Türbremse 11 betätigt oder die Tür zur Verhinderung ihrer Öffnung verriegelt werden.

## Patentansprüche

1. Verfahren zum Erkennen einer Unfallgefahr, bei dem
mit Umfeldsensoren (4) eines Fahrzeugs (1) Objekte (6) in Erfassungsbereichen (5) vor und/oder hinter dem Fahrzeug (1) erfasst und Abstandssignale (S1) erzeugt werden,
aus den Abstandssignalen (S1) während einer Fahrt des Fahrzeugs (1) Abstände der Objekte (6) vor und/oder hinter dem Fahrzeug (1) ermittelt werden, und
aus den Abstandssignalen (S1) bei stehendem Fahrzeug (1) ermittelt wird, ob eine Kollisionsgefahr des Objektes (6) mit einer sich öffnenden Fahrzeugtür (7) des Fahrzeugs (1) vorliegt, und bei Ermittlung einer Kollisionsgefahr ein Kollisionssignal (S2) ausgegeben wird.

2. Verfahren nach Anspruch 1, **dadurch gekennzeichnet, dass** eine Position des Objektes (6) ermittelt wird und ein Geschwindigkeitsvektor (v) des Objektes (6), vorzugsweise durch Dopplermessung oder zeitliche Positionsänderung, ermittelt wird, und aus der Position und dem Geschwindigkeitsvektor (v) eine Trajektorie des Objektes (6) ermittelt wird.

3. Verfahren nach Anspruch 2, **dadurch gekennzeichnet, dass** in dem Fall, dass die Trajektorie einen Mindestabstand zu einem Schwenkbereich (8) einer Fahrzeugtür (7) unterschreitet, ein Kollisionsfall erkannt und das Kollisionssignal (S2) ausgegeben wird.

4. Verfahren nach Anspruch 2 oder 3, **dadurch gekennzeichnet, dass** die Trajektorie des Objektes (6) mittels eines Kalmanfilters ermittelt wird.

5. Verfahren nach einem der vorherigen Ansprüche, **dadurch gekennzeichnet, dass** die Abstandssignale (S1 ) während der Fahrt des Fahrzeugs (1) in einem umfeldsensierenden Fahrerassistenz- und/oder Sicherheitssystem, z. B. einem Abstandswarnsystem und/oder Einparkhilfesystem, verwendet werden.

6. Verfahren nach einem der vorherigen Ansprüche, **dadurch gekennzeichnet, dass** von dem Fahrzeug (1) bei Vorliegen einer Zusatzbedingung, z. B. bei der Detektion eines Randsteins und/oder bei Erkennen einer bebauten Gegend und/oder bei Detektion eines Nichtvorliegens einer Stopand- Go- Situation und/oder bei Detektion einer Berührung oder Betätigung eines Türöffners, ein Aktivierungssignal (S3) ausgegeben wird, und das Kollisionssignal (S2) bei Ermittlung der Kollisionsgefahr und Vorliegen des Aktivierungssignals (S3) ausgegeben wird.

7. Verfahren nach einem der vorherigen Ansprüche, **dadurch gekennzeichnet, dass** die Kollisionsgefahr während eines Motorbetriebes, vorzugsweise auch während eines Zeitraums nach Ausschalten des Motors, ermittelt wird.

8. Verfahren nach einem der vorherigen Ansprüche, **dadurch gekennzeichnet, dass** bei Vorliegen des Kollisionssignals (S2) von einer Warnanzeige (10) ein Warnsignal, vorzugsweise ein optisches und/oder akustisches Warnsignal, ausgegeben wird.

9. Verfahren nach einem der vorherigen Ansprüche, **dadurch gekennzeichnet, dass** bei Vorliegen des Kollisionssignals (S2) eine Türenbetätigung beeinflusst wird, vorzugsweise durch Aktivierung einer Türbremse zur Verlangsamung eines Öffnungsvorganges der Fahrzeugtür (7) oder durch Verriegelung eines Türschlosses der als kollisionsgefährdet erkannten Fahrzeugtür (7).

10. Vorrichtung zum Erkennen einer Unfallgefahr mit einer Abstandsmesseinrichtung (4) zum Messen von Abständen von Objekten (6) in Erfassungsbereichen (5) vor und/oder hinter dem Fahrzeug (1) und Ausgabe von Abstandssignalen (S1), einer Berechnungseinrichtung (9), die die Abstandssignale (S1 ) aufnimmt und während einer Fahrt des Fahrzeuges (1) Abstände der Objekte (6) von dem Fahrzeug ermittelt und bei stehendem Fahrzeug (1) ermittelt, ob eine Kollisionsgefahr des Objektes (6) mit einer sich öffnenden Fahrzeugtür (7) vorliegt, und bei Ermittlung einer Kollisionsgefahr ein Kollisionssignal (S2) ausgibt.

11. Vorrichtung nach Anspruch 10, **dadurch gekennzeichnet, dass** die Abstandsmesseinrichtung ein oder mehrere Abstandssensoren (4) in einem vorderen Bereich, z. B. Radar-, Ultraschall- oder Infrarotsensoren (4) in einem vorderen Stoßfänger (2) oder Videokameras hinter einer Windschutzscheibe (13), oder in einem hinteren Bereich, z. B. Radar-, Ultraschall- oder Infrarotsensoren (4) in einem hinteren Stoßfänger (3) aufweist.

12. Vorrichtung nach Anspruch 10 oder 11, **dadurch gekennzeichnet, dass** die Abstandsmesseinrichtung (4) und die Berechnungseinrichtung (9) Teil eines umfeldsensierenden Fahrerassistenz- und/oder Sicherheitssystems, z. B. eines Einparkhilfesystems und/oder Abstandswarnsystems, sind.

13. Vorrichtung nach einem der Ansprüche 10 bis 12, **dadurch gekennzeichnet, dass** mindestens eine weitere Detektionseinrichtung (12) zur Ausgabe eines Aktivierungssignals (S3), z. B. eine Detektionseinrichtung für einen Randstein und/oder eine Detektionseinrichtung zur Ermittlung einer bebauten Gegend und/oder eine Detektionseinrichtung zur Ermittlung einer Stop- and- Go-Situation und/oder eine Detektionseinrichtung zur Ermittlung einer Berührung oder Betätigung eines Türöffners, vorgesehen ist, die ein Aktivierungssignal (S3) an die Berechnungseinrichtung (9) ausgibt, wobei das Kollisionssignal (S2) bei Erkennen einer Kollisionsgefahr und bei Vorliegen des Aktivierungssignals (S3) ausgegeben wird.

14. Vorrichtung nach einem der Ansprüche 10 bis 13, **dadurch gekennzeichnet, dass** eine Türbremse (11) zur Aufnahme des Kollisionssignals (S2) und Beeinflussung eines Türöffnungsvorgangs vorgesehen ist.

15. Vorrichtung nach einem der Ansprüche 10 bis 14, **dadurch gekennzeichnet, dass** das Kollisionssignal (S2) an eine Verriegelungseinrichtung für ein Türschloss der Fahrzeugtür ausgegeben wird, die die als kollisionsgefährdet erkannte Fahrzeugtür (7) bei Vorliegen des Kollisonssignals (S2), vorzugsweise auch während eines nachfolgenden Zeitraums, verriegelt.
